# EUROPEAN PATENT APPLICATION

(11) **EP 3 750 651 A1**
(43) Date of publication of application: **16.12.2020**
(21) Application number: 19179230.8
(22) Date of filing: 10.06.2019
(51) Int. Cl.: B22F 3/105, B23K 15/00, B23K 26/342, B29C 64/153, B33Y 10/00

(54) **POWDER BED FUSION ADDITIVE MANUFACTURING METHODS AND APPARATUS**

(71) Applicant: Renishaw PLC, Wotton-under-Edge, Gloucestershire GL12 8JR (GB)
(72) Inventor: The designation of the inventor has not yet been filed
(74) Representative: Matthews, Paul

(57) **Abstract**

This invention concerns a powder bed fusion additive manufacturing method comprising forming layers, L1, L2, of powder of a powder bed and exposing the layers, L1, L2, to one or more energy beams to melt the powder to form an object. The exposure of each layer, L1, L2, to the or each energy beam forms melt pools 300a to 300i in a conduction or transition mode with an exposure distance, PD, between adjacent exposures within the layer, L1, L2, being 40% to 60% of a width of the melt pools 300a to 300i generated by the exposures and an offset, OD, of exposures between successively melted layers, L1, L2, in a direction in which the exposure distance. PD, is measured, being 40% to 60% of the exposure distance OD.

## Description

### Field of Invention

This invention concerns powder bed fusion additive manufacturing methods and apparatus and, in particular, a method and apparatus for forming an object in a layer-by-layer manner by melting of powder of a powder bed such that the object has a single crystalline or single-crystalline-like microstructure.

### Background

Powder bed fusion additive manufacturing methods for producing objects comprise layer-by-layer solidification of a powder, such as a metal powder material, using a high energy beam, such as a laser or electron beam. A powder layer is deposited on a powder bed in a build chamber and the laser or electron beam is scanned across portions of the powder layer that correspond to a cross-section of the object being constructed. The laser or electron beam melts the powder to form a solidified layer. After selective solidification of a layer, the powder bed is lowered by a thickness of the newly solidified layer and a further layer of powder is spread over the surface and solidified, as required.

WO2014/13114444 A1 describes an apparatus for producing a three-dimensional workpiece by selective laser melting comprising a control unit adapted to control the operation of the powder application device and the irradiation device in order to generate a desired microstructure, i.e. either a polycrystalline globulitic microstructure or a directionally/dendritically solidified microstructure comprising substantially dendrites and/or single crystals.

WO2018/029478 A1 discloses an additive manufacturing system in which a sequence of energy pulses is determined to achieve a cooling rate that results in a specified microstructure, such as dendritic or cellular.

"Excellent mechanical and corrosion properties of austenitic stainless steel with a unique crystallographic lamellar microstructure via selective laser melting"; S. Sun, T. Ishimoto, K. Hagihara, Y. Tsutsumi, T. Hanawa, T. Nakano; Scriptia Materialia, 159, (2019) 89-93, discloses a method of forming a single-crystalline-like structure. A laser beam was scanned bidirectionally along an x-axis without rotation. The specimen fabricated at a higher energy density had columnar cells oriented at +/-45° only. The melt-pool shape formed at these high energy densities had a near keyhole shape. The authors believe that, due to the increased curvature of the melt pool in keyhole mode, lateral migration of the solid-liquid interface is dominant at the melt pool bottom and there would be little chance for cells to grow in the build direction at the bottom of the melt-pool. If vertically grown cells form by chance, their growth will be stopped by lateral solid-liquid interface migration. Fragments with (001) orientation along the build direction were partly observed in the lower part of the specimen fabricated under higher energy density, however, these did not extend through multiple melt-pools.

### Summary of Invention

According to a first aspect of the invention there is provided a powder bed fusion additive manufacturing method comprising forming layers of powder of a powder bed and exposing the layers to one or more energy beams to melt the powder to form an object, wherein the exposure of each layer to the or each energy beam forms melt pools in a conduction or transition mode with an exposure distance between adjacent exposures within the layer being 40% to 60% of a width of the melt pools generated by the exposures and an offset of exposures between successively melted layers, in a direction in which the exposure distance is measured, being 40% to 60% of the exposure distance.

It has been found that such a geometrical arrangement of exposures results in a single crystalline or single-crystalline-like microstructure. It is believed that this geometrical arrangement of exposures promotes the growth of grains in a direction at 45° to a build direction (the build direction being perpendicular to the powder layers). This can form a crystalline microstructure with its <110> orientation substantially parallel to the build direction.

The term "single-crystalline-like microstructure" is used herein is mean that a majority and in particular at least 90% and preferably at least 95% of an object has a single crystalline microstructure.

It will be understood that "conduction mode" as used herein means that the energy of the energy beam is coupled into the powder bed primarily through heat conduction creating a melt pool having a width greater than its depth. This is to be contrasted with keyhole mode in which a hole is formed in the melt pool where material is vaporised by exposure to the energy beam. A melt pool formed in keyhole mode has a deep, narrow profile with a ratio of depth to width of greater than 1.5. A transition mode exists between the conduction mode and the keyhole mode, wherein the energy does not dissipate quickly enough and the processing temperature rises above the vaporisation temperature. A depth of the melt pool increases and penetration of the melt pool can start. Preferably, the method comprises exposing the layer to the or each energy beam to form melt pools in a conduction or transition mode having a depth to width ratio of less than 1.5, preferably, less than 1, more preferably less than 0.75 and most preferably less than or equal to 0.5.

It will be understood that "adjacent" as used herein is used to refer to ones of the features that are the subject of the adjective "adjacent", e.g. exposures, melt pools or hatch lines, that are immediate neighbours (i.e. next door) to each other.

The method may comprise scanning the energy beam or at least one of the energy beams along, preferably parallel, hatch lines on each layer, wherein the exposure distance is a hatch distance between adjacent hatch lines. The hatch distance between adjacent hatch lines may be 40% to 60% of a width (in a direction perpendicular to a direction of travel on the energy beam along the adjacent hatch lines) of the melt pools generated by exposure of the adjacent hatch lines to the one or more energy beams. The method may comprise scanning the adjacent hatch lines one after the other. The method may comprise scanning the hatch lines with the energy beam or at least one of the energy beams such that heat build up in a region of the powder bed does not cause deviation of the melt pool from the desired (conduction or transition mode) melt pool shape. A geometry of a section of the object being built may result in different length hatch lines. In such scenarios, to maintain the required melt pool shape, the method may comprise changing the scan parameters to achieve different energy densities for different hatch lines, such as by changing the laser powder, scan velocity, exposure time and/or point distance, and/or consecutively scanning non-adjacent hatch lines.

The hatch lines on successively melted layers are parallel. The hatch lines of a layer may be scanned bidirectionally, i.e. back and forth along consecutively scanned hatch lines, or may be scanned unidirectionally. Unidirectional scanning may aid the dissipation of heat and therefore, maintenance of the required melt pool shape.

Each layer may have a layer thickness less than half an average (mean) melt pool depth, such as an average melt pool depth of at least 10 of the melt pools and preferably all the melt pools. Each layer may have a layer thickness of less than 50 micrometres, less than 40 micrometres or less than 30 micrometres. In one embodiment, the layer thickness is around 20 micrometres. It has been found that the required arrangement of melt pools can be achieved with such a layer thickness.

According to a second aspect of the invention there is provided a powder bed fusion additive manufacturing method comprising forming layers of powder of a powder bed and exposing the layers to one or more energy beams to melt the powder to form an object, wherein the exposure of each layer to the or each energy beam forms melt pools with a depth to width ratio of less than 1.5, wherein adjacent melt pools overlap such that a (mean) spacing between centres of the adjacent melt pools is 40% and 60% of a (mean) width of the melt pools and a centre of each melt pool of a next layer is offset, in a direction parallel to the layers, from the centres of melt pools of the immediately preceding layer by 40% to 60% of the spacing between the centres of the adjacent melt pools.

The exposed layers may comprise more than three layers, a majority of layers and preferably, all layers that are formed in the building of an object.

The exposure of each layer to the or each energy beam may form melt pools across the layers arranged relative to each other such that, for a plurality of pairs of adjacent first melt pools formed in a one of the layers, columnar grains formed at substantially 45 degrees to a build direction during the solidification of the pair of adjacent melt pools coincide with a bottom of a second melt pool formed in the next layer, which partially remelts material melted during formation of the pair of adjacent melt pools.

The exposure of each layer to the or each energy beam may form melt pools across the layers arranged relative to each other such that a lowest point on melt pools in successively solidified layers are offset relative to each other by an average (mean) of approximately 45 degrees, such as between 40 to 50 degrees, to the build direction. The average may be calculated for at least 10 pairs of the melt pools, and preferably all the melt pools, extending across three or more of the layers and preferably all the layers. The average may be calculated for melt pools that do not form a surface of the object and preferably are two, three or more melt pool widths in from a surface of the object. For an object formed through the exposure of a plurality of hatch lines, the melt pool widths are calculated perpendicular to the hatch lines.

It is believed that such an arrangement of melt pools will produce a single crystalline or a single-crystalline-like microstructure.

According to a third aspect of the invention there is provided a powder bed fusion additive manufacturing apparatus comprising a build platform for supporting a powder bed, and layer formation device for forming layers of powder to form the powder bed, a scanner of directing one or more energy beams to each layer to melt the powder in selected regions of each layer and a controller configured to control the scanner and the layer formation device to carry out the method of the first and/or second aspects of the invention.

According to a fourth aspect of the invention there is provided build instructions stored on a data carrier, which, when executed by a controller of a powder bed fusion additive manufacturing apparatus cause the powder bed fusion additive manufacturing apparatus to build an object in accordance with the method of the first and/or second aspects of the invention.

According to a fifth aspect of the invention there is provided instructions stored on a data carrier, which, when executed by a processor, cause the processor to generate build instructions for building an object using a powder bed fusion additive manufacturing apparatus in accordance with the fourth aspect of the invention.

### Description of the Drawings

**Figure 1** is a schematic view of a powder bed fusion additive manufacturing apparatus according to an embodiment of the invention;
**Figure 2** is a hatch exposure strategy used in a method according to an embodiment of the invention;
**Figure 3** is a diagrammatic representation of melt pools formed using a method according to an embodiment of the invention;
**Figure 4** shows a cross-section of a part in a plane parallel with a build direction for a part built in IN625 using a prior art exposure strategy;
**Figure 5** shows a cross-section of a part in a plane parallel to a build direction for a part built in IN625 using an exposure strategy according to an embodiment of the invention; and
**Figure 6** is an image obtained using electron backscatter diffraction (EBSD) showing the single-crystalline-like structure of a cube built in SS316L using a method according to an embodiment of the invention.

### Description of Embodiments

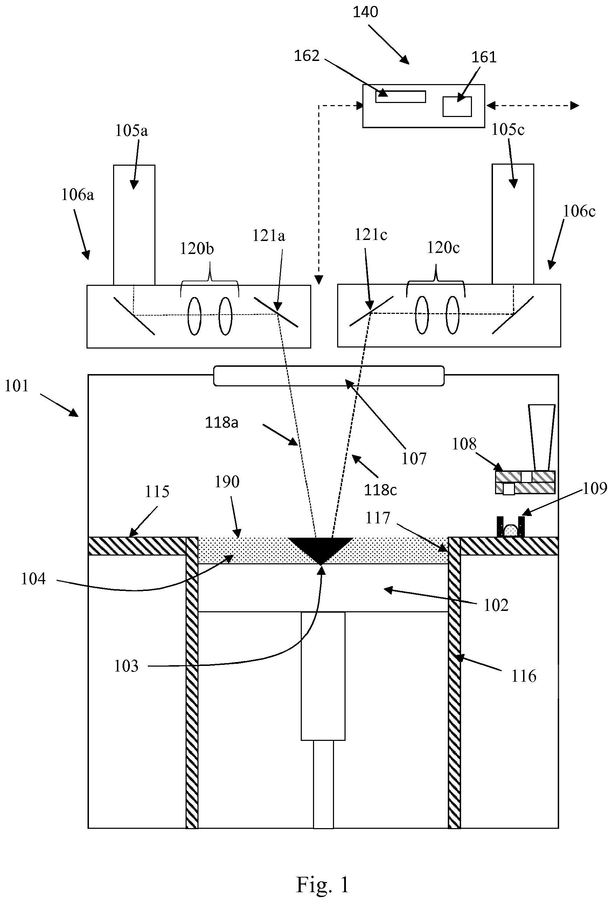

Referring to Figure 1, a powder bed fusion additive manufacturing apparatus according to an embodiment of the invention comprises a build chamber 101 sealable from the external environment such that an inert atmosphere can be maintained therein. Within the build chamber 101 are partitions 115, 116 that define a build sleeve 117. A build platform 102 is lowerable in the build sleeve 117. The build platform 102 supports a powder bed 104 and workpiece 103 as the workpiece is built by selective laser melting of the powder. The platform 102 is lowered within the build sleeve 117 under the control of a drive (not shown) as successive layers of the workpiece 103 are formed.

Layers of powder 104 are formed as the workpiece 103 is built by a layer formation device, in this embodiment a dispensing apparatus 108 and a wiper 109. For example, the dispensing apparatus 108 may be apparatus as described in WO2010/007396. The dispensing apparatus 108 dispenses powder onto an upper surface defined by partition 115 and is spread across the powder bed by the wiper 109. A position of a lower edge of the wiper 109 defines a working plane 190 at which powder is consolidated.

A plurality of laser modules 105a, 105c generate laser beams 118a, 118c, for melting the powder 104, the laser beams 118a, 118c directed as required by a corresponding optical module 106a, 106c. The laser beams 118a, 118c, enter through a common laser window 107. Each optical module comprises steering optics 121, such as two mirrors mounted on galvanometers, for steering the laser beam 118 in perpendicular directions across the working plane and focussing optics 120, such as two movable lenses for changing the focus of the laser beam 118. The scanner is controlled such that the focal position of the laser beam 118 remains in the working plane as the laser beam 118 is moved across the working plane. Rather than maintaining the focal position of the laser beam in a plane using dynamic focusing elements, an f-theta lens may be used.

An inlet and outlet (not shown) are arranged for generating a gas flow across the powder bed formed on the build platform 102. The inlet and outlet are arranged to produce a laminar flow having a flow direction from the inlet to the outlet. Gas is re-circulated from the outlet to the inlet through a gas recirculation loop (not shown).

A controller 140, comprising processor 161 and memory 162, is in communication with modules of the additive manufacturing apparatus, namely the laser modules 105a, 105b, 105c, 105d, optical modules 106a, 106b, 106c, 106d, build platform 102, dispensing apparatus 108 and wiper 109. The controller 140 controls the modules based upon software stored in memory 162 as described below.

In use, a computer receives a geometric model, such as an STL file, describing a three-dimensional object to be built using the powder bed fusion additive manufacturing apparatus. The computer slices the geometric model into a plurality of slices to be built as layers in the powder bed fusion additive manufacturing apparatus based upon a defined layer thickness. In this embodiment, the defined layer thickness, L, is less than 30 micrometres and, preferably 20 micrometres.

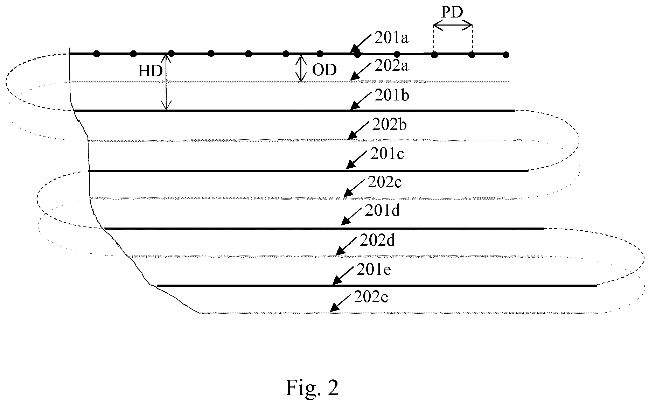

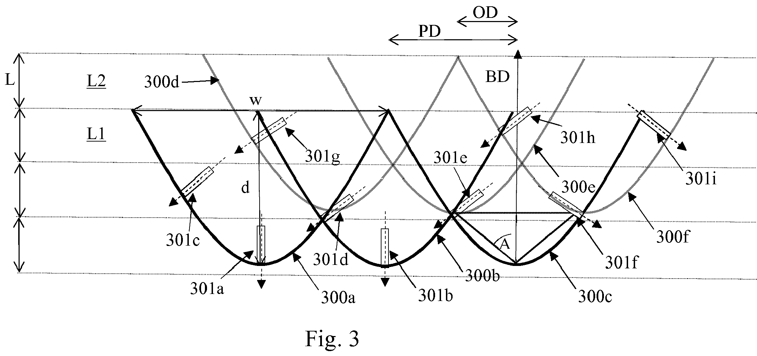

A laser exposure sequence is then determined for melting areas of each layer to form the corresponding cross-section (slice) of the object. Referring to Figure 2, in this embodiment, a plurality of parallel hatch lines 201a to 201e; 202a to 202e are determined for each layer, the hatch lines defining paths for the laser(s) to follow in the melting of an area of the powder layer to form the object. In Figure 2, the dark hatch lines 201a to 201e show the hatch lines for a first layer and the light grey hatch lines 202a to 202e show the hatch lines for a second, immediately succeeding layer. It will be understood that the hatch lines for every other layer will be substantially aligned in the build direction, *BD* (see, for example, Figure 3).

The hatch lines are spaced within a layer a predetermined exposure (hatch) distance, *HD,* apart. The hatch distance, *HD,* is set at 40% to 60% of the melt pool width, *w* (the width of the melt pool perpendicular to the hatch lines). A melt pool width, w, is predetermined for the set of laser parameters selected to be used, such as laser power, scan velocity (or in a point scanning regime as used in Renishaw's AM400 machine, point distance, *PD,* and exposure time) and laser spot size (1/e) (focal length). Typically, the laser parameters are selected to form a melt pool having a width of 80 to 200 micrometres and more typically around 130 to 170 micrometres. The laser parameters (and scanning regime) are also selected to ensure that the melt pool is formed in a conduction mode with the depth, *d,* to width, *w*, ratio of the melt pool less than unity. In this embodiment, the laser parameters are selected such that the depth to width ratio for the melt pools is around 0.5 (given fluctuations will occur due to process variability).

For a single laser exposing a plurality of neighbouring hatch lines having lengths above a predetermined threshold, such as longer than 0.5mm, the laser beam scans the hatch lines successively in a bidirectional manner (an adjacent hatch line being scanned in an opposite direction to the immediately preceding hatch line). For shorter hatch lines, the laser beam may expose the hatch lines in order but unidirectionally or the laser beam may expose the hatch lines out of order such that adjacent hatch lines are not sequentially processed. For such small sections, an order in which the hatch lines are irradiated may be randomized with a specified minimum number of hatches between consecutively irradiated hatches and/or a specified minimum time delay between the processing of adjacent hatch lines. This may give time for the energy to dissipate such that melt pools continue to be formed having the required dimensions. In a multi-laser system, allocation of the hatch lines to different lasers allows for more complex exposure strategies but the overall aim of any such exposure strategy is for the melt pools to be formed having the required depth to width ratio. Furthermore, exposure strategies not comprising scanning of hatch lines may be used, such as spaced apart point scanning as disclosed in WO2016/079496, which is incorporated herein by reference.

An orientation of the object relative to a build direction may be selected based upon a preferred hatch length to be used for forming the desired micro-structure. For example, an object comprising a rod-like- or bar-like-structure may be orientated such that hatch lines are not parallel, such as at greater than 45 degrees, to a longitudinal direction of the rod-like- or bar-like-structure. It may be preferable for the hatch lines to be substantially perpendicular to the longitudinal direction.

Hatch lines 201a to 201e and 202a to 202e (or in the case of spaced apart point scanning, discrete exposures) between successively melt layers are offset by an offset distance, *OD,* that is 40% to 60% of the exposure/hatch distance, *HD* and, most preferably 50% of the exposure/hatch distance, *HD.* The hatch lines across all the layers are parallel.

Once computed the instructions are sent to a powder bed fusion additive manufacturing apparatus for execution.

It has been found that parts formed using such an exposure strategy have a substantially single crystalline micro-structure. Not to be bound by any one theory but the applicant believes a single crystalline micro-structure is formed for the reasons as now explained with reference to Figure 3. Figure 3 illustrates a typical melt pool arrangement that may be achieved when using such an exposure strategy. Figure 3 shows the melt pool shapes perpendicular to the hatch lines. A first layer, L1, is exposed to the laser beam(s) when scanned in hatch lines to form melt pools, 300a to 300c. Each melt pool overlaps by 50% of their width, *w*, with the or each adjacent melt pool. Columnar grains 301a to 301i are formed in each melt pool along the steepest thermal gradient, which is typically normal to a surface of the melt pool. Parts of the melt pool that are remelted after solidification due to an overlapping melt pool will be reformed with grains based upon the geometry of this subsequently formed melt pool. For the first layer, L1, columnar grains 301a, 301b may be formed at a bottom of each melt pool aligned in a build direction, BD. Columnar grains 301c, 301d, 301e, 301f formed at sides of the melt pool (away from a centre of the melt pool) will typically be aligned more closely to 45 degrees to the build direction, *BD,* due to the shape of the melt pool. Accordingly, towards a centre of melt pools 300a, 300b, 300c, <100> oriented grains are formed. Away from the centre of the melt pools <110> oriented grains are formed.

For the next layer, L2, (and layers thereafter), the melt pools are offset by an offset distance, OD, from the centres of melt pools of the immediately preceding layer by 50% of the hatch spacing, *HD* between the centres of the adjacent melt pools in the immediately preceding layer. As a result, a bottom of each melt pool coincides with columnar grains 301c, 301d, 301e, 301f formed during solidification of a melt pool in the immediately preceding layer oriented at 45 degrees to the build direction, *BD.* These columnar grains 301c, 301d, 301e, 301f "seed" the melt pools resulting in the continuation of grains in this orientation in the melt pool for the next layer, even at the bottoms/centres of the melt pools. This "seeding" and continuation of the columnar grains 301c, 301d, 301e, 301f oriented at 45 degrees to the build direction, BD, results in a single crystalline micro-structure with a <110> orientation substantially parallel to the build direction.

As shown in Figure 3, in order to maintain this directional growth of the columnar grains, a line between corresponding points, such as the bottoms, of the melt pools of successively melted layers should form an angle, A, of approximately 45 degrees to the build direction, BD. This will be governed by the melt pool shape and the layer thickness.

A direction in which the hatch lines are scanned may be selected based upon a gas flow direction of the gas across the powder bed. For example, an order in which the hatch lines are scanned may be selected such that a direction the energy beam(s) progressively scan the hatch lines (in a direction perpendicular to the hatch lines) is at least partially opposed to a gas flow direction. In addition, for unidirectionally scanned hatch lines, the hatch lines themselves may be scanned in a direction at least partially opposed to the gas flow direction.

An orientation in which an object is built relative to a build direction may be selected such that the single crystalline micro-structure extends in a desired direction through the object.

### Example 1

1cm x 1cm x 1cm cubes were built in IN625 using a Renishaw AM400 additive manufacturing machine and a prior art exposure strategy. A layer thickness of 20 micrometres was used and the following laser parameters: -
Laser power = 190W
Point distance = 120 micrometres
Exposure time = 120 microseconds
Hatch distance = 95 micrometres

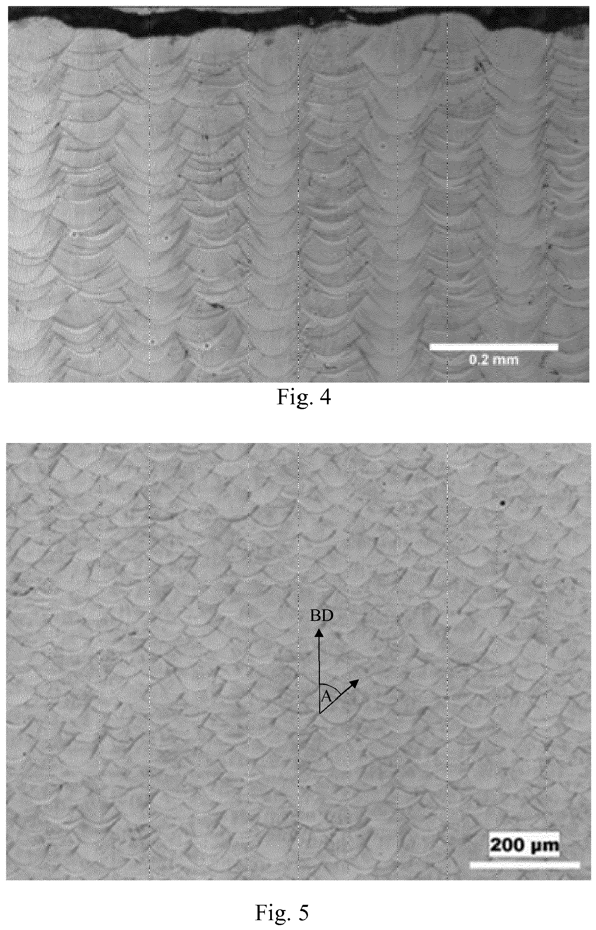

Figure 4 is in image of a cross-section of one of the cubes. The solidified melt pools can be clearly seen with the overlapping melt pools within a layer. The melt pools of each layer are substantially aligned in the build direction (a layer offset of 0).

The grain orientation of the cube was analysed using EBSD and it was found to have a poly-crystalline micro-structure.

### Example 2

1cm x 1cm x 1cm cubes were built in IN625 using a Renishaw AM400 additive manufacturing machine and an exposure strategy in accordance with the invention as described above. A layer thickness of 20 micrometres was used and the following laser parameters: -
Laser power = 160W
Point distance = 45 micrometres
Exposure time = 60 microseconds
Hatch distance = 55 micrometres
Layer offset = 27.5 micrometres

Figure 5 is in image of a cross-section of one of the cubes. The solidified melt pools can be clearly seen with the overlapping melt pools within a layer and the melt pools of one layer offset perpendicular to the build direction relative to the melt pools of the preceding layer by around 50%. The grain orientation of the cube was analysed using EBSD and it was found to have a single-crystalline-like micro-structure.

### Example 3

1cm x 1cm x 1cm cubes were built in SS316L using a Renishaw AM250 additive manufacturing machine and an exposure strategy in accordance with the invention as described above. A layer thickness of 20 micrometres was used and the following laser parameters: -
Laser power = 170W
Point distance = 80 micrometres
Exposure time = 80 microseconds
Hatch distance = 80 micrometres
Layer offset = 40 micrometres

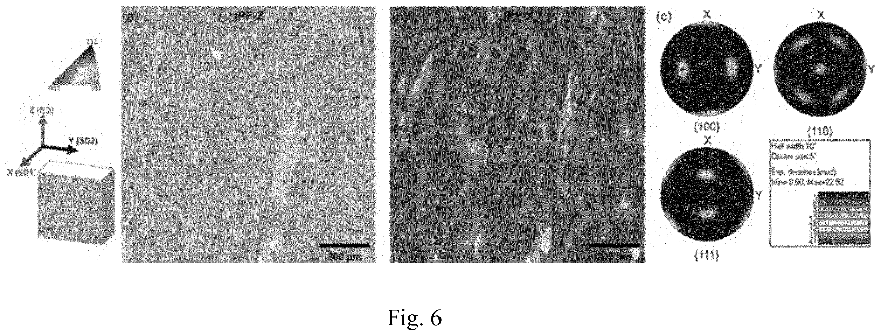

The grain orientation of one of the cubes was analysed using EBSD and it was found to have a single-crystalline-like micro-structure with its <110> orientation parallel to the build direction. An image obtained using EBSD is shown in Figure 6.

### Example 4

Parts were built in Hastelloy X using a Renishaw AM400 additive manufacturing machine and an exposure strategy in accordance with the invention as described above. A layer thickness of 20 micrometres was used and the following laser parameters: -
Laser power = 160W
Point distance = 44 micrometres
Exposure time = 60 microseconds
Hatch distance = 66 micrometres
Layer offset = 33 micrometres

The grain orientation of the parts was analysed using EBSD and the parts were found to have a single-crystalline-like micro-structure

It will be understood that alterations and modifications can be made to the above described embodiments without departing from the invention as described herein. For example, other materials may be used, such as other difficult to weld alloys. For example, the invention may be used to form parts with a single crystalline or single-crystalline-like microstructure from superalloys, such as other Inconels, Waspaloy, other Rene alloys, Incoloy, MP98T, TMS alloys, and CMSX single crystal alloys. Examples of such alloys are RENE 41, RENE77, IN738 and CM247.

## Claims

1. A powder bed fusion additive manufacturing method comprising forming layers of powder of a powder bed and exposing the layers to one or more energy beams to melt the powder to form an object, wherein the exposure of each layer to the or each energy beam forms melt pools in a conduction or transition mode with an exposure distance between adjacent exposures within the layer being 40% to 60% of a width of the melt pools generated by the exposures and an offset of exposures between successively melted layers, in a direction in which the exposure distance is measured, being 40% to 60% of the exposure distance.

2. A powder bed fusion additive manufacturing method according to claim 1, comprising scanning the energy beam or at least one of the energy beams along, hatch lines on each layer, wherein the exposure distance is a hatch distance between adjacent hatch lines.

3. A powder bed fusion additive manufacturing method according to claim 2, wherein the hatch distance between adjacent hatch lines is 40% to 60% of a width of the melt pools generated by exposure of the adjacent hatch lines to the one or more energy beams.

4. A powder bed fusion additive manufacturing method according to claim 2 or claim 3, comprising scanning the adjacent hatch lines one after the other.

5. A powder bed fusion additive manufacturing method according to any one of claims 2 to 4, wherein the hatch lines on successively melted layers are parallel.

6. A powder bed fusion additive manufacturing method according to any one of the preceding claims, wherein each layer has a layer thickness less than half an average melt pool depth.

7. A powder bed fusion additive manufacturing method according to any one of the preceding claims, wherein each layer has a layer thickness of less than 50 micrometres.

8. A powder bed fusion additive manufacturing method comprising forming layers of powder of a powder bed and exposing the layers to one or more energy beams to melt the powder to form an object, wherein the exposure of each layer to the or each energy beam forms melt pools with a depth to width ratio of less than 1.5, wherein adjacent melt pools overlap such that a spacing between centres of the adjacent melt pools is 40% and 60% of a width of the melt pools and a centre of each melt pool of a next layer is offset, in a direction parallel to the layers, from the centres of melt pools of the immediately preceding layer by 40% to 60% of the spacing between the centres of the adjacent melt pools.

9. A powder bed fusion additive manufacturing method according to claim 8, wherein the exposure of each layer to the or each energy beam forms melt pools across the layers arranged relative to each other such that, for a plurality of pairs of adjacent first melt pools formed in a one of layers, columnar grains formed at substantially 45 degrees to a build direction during the solidification of the pair of adjacent melt pools coincide with a bottom of a corresponding second melt pool formed in the next layer, which partially remelts material melted during formation of the pair of adjacent melt pools.

10. A powder bed fusion additive manufacturing method according to claim 8 or claim 9, wherein the exposure of each layer to the or each energy beam forms melt pools across the layers arranged relative to each other such that a lowest point on melt pools in successively solidified layers are offset relative to each by an average of approximately 45 degrees to the build direction.

11. A powder bed fusion additive manufacturing apparatus comprising a build platform for supporting a powder bed, and layer formation device for forming layers of powder to form the powder bed, a scanner of directing one or more energy beams to each layer to melt the powder in selected regions of each layer and a controller configured to control the scanner and the layer formation device to carry out the method of any one of the preceding claims.

12. Build instructions stored on a data carrier, which, when executed by a controller of a powder bed fusion additive manufacturing apparatus cause the powder bed fusion additive manufacturing apparatus to build an object in accordance with the method of any one of claims 1 to 10.

13. Instructions stored on a data carrier, which, when executed by a processor, cause the processor to generate build instructions for building an object using a powder bed fusion additive manufacturing apparatus in accordance with claim 12.
